**Europäisches Patentamt**

**European Patent Office**

**Office européen des brevets**

(11) Veröffentlichungsnummer: **0 015 312**
**B1**

## EUROPÄISCHE PATENTSCHRIFT

(45) Veröffentlichungstag der Patentschrift:
29.05.85

(51) Int. Cl.⁴: **B 29 C 47/12,** B 29 C 47/20

(21) Anmeldenummer: **79104629.5**

(22) Anmeldetag: **21.11.79**

(54) **Extrudierter Hohlprofilstrang aus thermoplastischem Kunststoff mit Oberflächenstruktur und Verfahren zu seiner Herstellung.**

(30) Priorität: **05.03.79 DE 2908487**

(43) Veröffentlichungstag der Anmeldung:
**17.09.80 Patentblatt 80/19**

(45) Bekanntmachung des Hinweises auf die Patenterteilung:
**29.05.85 Patentblatt 85/22**

(84) Benannte Vertragsstaaten:
**DE FR GB IT**

(56) Entgegenhaltungen:
**DE - A - 2 823 585**
**DE - B - 1 191 550**
**GB - A - 1 383 923**

(73) Patentinhaber: **Röhm GmbH, Kirschenallee**
**Postfach 4242, D-6100 Darmstadt 1 (DE)**

(72) Erfinder: **Anders, Ludwig, Hauptstrasse 41,**
**D-6104 Seeheim-Jugenheim 2 (DE)**
Erfinder: **Schanz, Karl-Heinz, Fürthweg 1,**
**D-6109 Mühltal-Traisa (DE)**
Erfinder: **Vetter, Heinz, Dr.Ing., Taunusstrasse 92,**
**D-6101 Rossdorf (DE)**

**Beschreibung**

Die Erfindung betrifft ein Verfahren zur Herstellung extrudierter Hohlprofilstränge aus thermoplastischem Kunststoff. Derartige Hohlprofilstränge haben meistens eine glatte Oberfläche. Sie lassen sich auch mit einer in Extrusionsrichtung gleichbleibenden Oberflächenstruktur herstellen, wenn man zu ihrer Herstellung ein entsprechend geformtes Extrusionswerkzeug bzw. ein Kalibriervorrichtung mit entsprechender Struktur der inneren Oberfläche verwendet. Es ist häufig erwünscht, derartige Hohlprofilstränge mit einer in Extrusionsrichtung wechselnden Oberflächenstruktur einzusetzen, beispielsweise um eine gleichmäßigere Verteilung des durchfallenden Lichts oder ein gefälligeres Aussehen zu bewirken.

Es ist bekannt, Hohlprofilstränge mit einer gekörnten Oberflächestruktur durch Extrusion aus einer teilweise thermoplastischen Formmasse zu erzeugen, die feinteilige, schwer aufschmelzbare, also nicht thermoplastische Kunststoffpartikel enthält. Nach dem Verlassen der Extrusionsdüse bzw. der Kalibriervorrichtung erzeugen die eingeschlossenen Partikel infolge ihrer thermoplastischen Rückstellkräfte eine körnige Oberflächenstruktur. Die dafür geeignete inhomogene Formmasse wird nur ungern verarbeitet, weil Materialabfälle, insbesondere das beim Anfahren der Anlage entstehende unbrauchbare Extrudat, nicht zusammen mit Abfällen homogener Formmasse wiederverwendet werden können.

Extrudierte Vollprofilstränge aus thermoplastischem Kunststoff lassen sich leicht mit einer in Extrusionsrichtung wechselnden Oberflächenstruktur versehen, indem man sie durch einen Prägekalander laufen läßt. Dieses Verfahren ist bei Hohlprofilsträngen nicht anwendbar, da sie zwischen den Kalanderwalzen zusammengedrückt würden. Die vorliegende Erfindung löst die Aufgabe, extrudierte Hohlprofilstränge aus thermoplastischem Kunststoff mit einer in Extrusionsrichtung wechselnden Oberflächenstruktur zugänglich zu machen. Darunter wird jede Struktur verstanden, die nicht an jeder quer zur Extrusionsrichtung liegenden Schnittfläche das gleiche Profil aufweist. Thermoplastische Kunststoffe im Sinne der Erfindung sind solche, die unter den Bedingungen der Extrusion vollständig aufschmelzen oder — wie im Falle pigmentierter Kunststoffe — eine genaue Abformung der Werkzeugoberfläche zulassen. Ungeeignet sind Formmassen mit schwer oder nicht schmelzbaren Anteilen, die die Oberflächenstruktur der daraus hergestellten Formkörper beeinflussen.

Zur Herstellung einer extrudierten Stegdoppelplatte aus Kunststoff mit zwei parallelen Außenwänden und einer Vielzahl von dazwischen angeordneten, die Außenwände verbindenden Stegen dient in bekannter Weise ein Verfahren, umfassend die Extrusion eines thermoplastischen Kunststoffes durch eine mit mehreren Kernstücken ausgerüstete Extrusionsdüse zu einem Hohlstrang, dessen Querschnitt im wesentlichen demjenigen der herzustellenden Stegdoppelplatte entspricht, Einführen des extrudierten Hohlstranges in eine Unterdruckkalibriervorrichtung, während innerhalb des Hohlstranges atmosphärischer Luftdruck herrscht, wobei wenigstens eine Seite des Hohlstranges mit einem mit einer negativen Oberflächenstruktur versehenen flexiblen Band bedeckt wird und im Verbund mit diesem in die Kalibriereinrichtung einläuft und Abkühlung des Hohlstranges in der Kalibriervorrichtung unter die Erweichungstemperatur. Nach dem Austritt aus der Kalibriervorrichtung wird das Band von dem Hohlsteg abgetrennt.

Erfindungsgemäß läßt man in die Kalibriervorrichtung im Verbund mit dem Hohlsteg ein luftundurchlässiges flexibles Band mit einer negativen Oberflächenstruktur einlaufen, welches mit einer Kraft von mindestens 0,1 N/cm² an der Oberfläche des Hohlstranges haftet und dessen ganze Breite einnimmt, so daß der Unterdruck auf dieser Seite des Stranges nur auf das Band einwirkt.

Als »negative Oberflächenstruktur« wird die Gegenform bezeichnet, an der sich die Oberflächenstruktur des Hohlprofilstranges abformt. Da diese Oberflächenstruktur jede beliebige Gestalt haben kann, ist auch die Gestalt der »negativen Oberflächenstruktur« weitgehend beliebig. Die Tiefe der Struktur, d. h. die Differenz zwischen den höchsten Erhebungen und tiefsten Einsenkungen innerhalb der Struktur kann zwischen Bruchteilen eines Millimeters bis zu mehreren Millimetern schwanken. Um von der Oberfläche des flexiblen Bandes abformbar zu sein, muß die Oberflächenstruktur des Hohlstranges weitgehend frei von Hinterschneidungen sein, was nicht unbedingt für die negative Struktur des Bandes gelten muß. Innerhalb der genannten Grenzen besteht weitgehende Gestaltungsfreiheit. Man kann unregelmäßige oder geometrisch regelmäßige, ornamentale Strukturen, Schriftzeichen, bildliche Darstellungen oder Strukturen mit bestimmten technischen Wirkungen anbringen, wobei für die Flächenausdehnung der Strukturelemente noch weitere Grenzen als für ihre Tiefe bestehen. Eine Vielzahl von Oberflächenstrukturen kann unmittelbar von flächigen, strukturierten Werkstoffen abgeformt werden, z. B. von rauhen Papieren, Sandpapier, offenporigen Schaumstoffen, krakelierten Lackschichten und dergleichen. Andere Strukturen, z. B. mit ornamentalen Formen modellierte Flächen, lassen sich auf den Hohlstrang übertragen, indem man die strukturierte Fläche als negative Struktur auf einem Band abformt und den Hohlsteg an diesem im Sinne der Erfindung strukturiert.

Der Werkstoff für das mit der negativen Oberflächenstruktur versehene Band wird so gewählt, daß es nach der Abkühlung des Hohlstranges davon ablösbar ist. Das Band soll wenigstens so flexibel sein, daß es sich mit einem kleinen Krümmungsradius, beispielsweise an einer Umlenkwalze, von der Oberfläche des Hohlstranges abspreizen und lösen läßt. Zwischen dem Band und dem Hohlprofilstrang ist eine Haftfestigkeit von mindestens 0,1 N/cm² erforderlich. Das Vakuum in der Vakuumkalibriereinrichtung wirkt nur auf das luftundurchlässige Band ein und hält das daran haftende Hohlprofil aufrecht. Wenn die Haftung zu gering ist, löst sich das Hohlprofil von dem Band und fällt zusammen.

Überraschenderweise entsteht bei richtiger Wahl des Bandmaterials eine ausreichende Haftung sofort beim gemeinsamen Eintritt des strukturierten Bandes und des thermoplastischen Hohlprofilstranges in den Mund der Kalibriervorrichtung, besonders wenn der Hohlstrang dabei geringfügig zusammengedrückt wird. Eine Haftfestigkeit von geeigneter Größe ist zwischen den meisten in Betracht kommenden Kunststoffen und Metallen, wie Stahl, Aluminium, Kupfer, gegeben. An einem strukturierten Band aus Kunststoff haftet der Hohlstrang, wenn ein genügender Polaritätsunterschied zwischen den Werkstoffen besteht. So liegt die Haftfestigkeit von Polymethylmethacrylat oder Polyvinylchlorid an koronabehandeltem Polyäthylen, vernetztem Polyvinylacetat, Polyamiden und Gummi über 0,1 N/cm², aber die an hochmolekularem, nicht vorbehandeltem Polyäthylen oder Polypropylen im allgemeinen darunter.

Zwischen Polymethylmethacrylat und Polyvinylchlorid oder unvernetztem Polyvinylacetat ist die Haftung meistens so fest, daß sich diese Werkstoffe nach dem Erkalten nicht mehr voneinander lösen lassen. Eine gewisse Haftung des Bandes ist beispielsweise auch dann erwünscht, wenn dieses als Schutzüberzug bis zur Verwendung des erzeugten Hohlprofilstranges auf dessen Oberfläche verbleiben soll, z. B. ein Papierband.

Papier-, Karton- und Kunststoffbänder lassen sich in an sich bekannter Weise mittels Prägewalzen mit der gewünschten negativen Oberflächenstruktur versehen. Wenn das strukturierte Band selbst aus einem thermoplastischen Kunststoff besteht, so genügt es, daß seine Oberflächenstruktur wenigstens so lange nach dem Kontakt mit dem heißen Hohlprofilstrang nicht plastisch erweicht, bis sich dessen Oberfläche der Struktur angeformt hat. Wenn das Band mehrfach wiederverwendet werden soll, ist es von Vorteil, ein unter den Arbeitsbedingungen nicht plastisch erweichendes Bandmaterial zu verwenden, im Fall von Kunststoffen also solche, die nach dem Anbringen der negativen Oberflächenstruktur vernetzt oder gehärtet worden sind.

Beim Durchgang durch die Kalibriervorrichtung wird der Hohlprofilstrang durch einen in dem Formkanal der Kalibriervorrichtung wirkenden Unterdruck gegen die Innenfläche der Kalibriervorrichtung gedrückt.

Für die Herstellung der erfindungsgemäßen Hohlprofilstränge geeignete Formmassen sind z. B. Acrylglas®, PVC, Polycarbonat oder Polystyrol bzw. schlagzähe Mischpolymerisate des Styrols. Acrylglas ist besonders bevorzugt. Darunter werden Polymethylmethacrylat und zum überwiegenden Teil aus Methylmethacrylat aufgebaute Mischpolymerisate mit Molekulargewichten zwischen 100 000 und 250 000 verstanden. Je nach Bedarf kann die Formmasse klar durchsichtig, getrübt oder beliebig eingefärbt sein. Ein bevorzugter Gegenstand der Erfindung sind Stegdoppelplatten mit zwei parallelen Außenwänden und einer Vielzahl von dazwischen angeordneten, die Außenwände verbindenden Stegen. Sie können auf einer oder auf beiden Außenwänden erfindungsgemäß strukturiert sein.

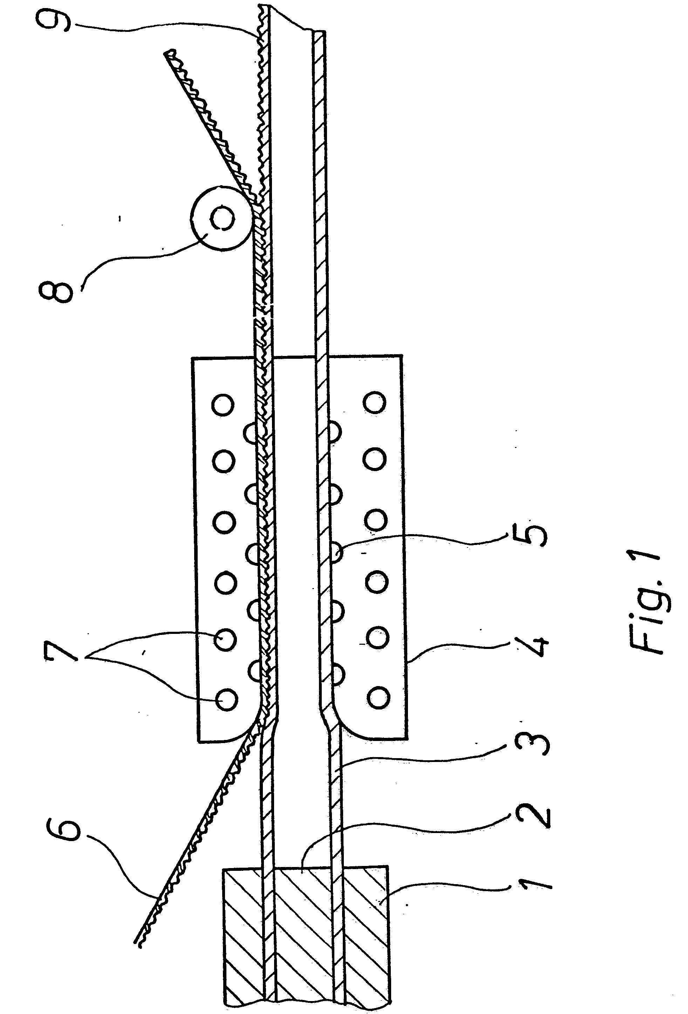

Eine Vorrichtung zur Herstellung der erfindungsgemäßen Hohlprofilstränge ist in der beigefügten Figur 1 im Schnittbild dargestellt. Aus einer Extrusionsdüse (1) mit dem Düsenkern (2) wird ein Hohlstrang (3) extrudiert und in die Vakuumkalibriervorrichtung (4) eingeleitet. Mittels Vukuumnuten (5) wird der Strang an der Wandung der Kalibriervorrichtung gehalten. Das flexible, luftundurchlässige, strukturierte Band (6) wird am Eintrittsmund mit dem Strang (3) zusammengeführt und durchläuft die Kalibriervorrichtung, die mittels eines Kühlmittels in dem Rohrsystem (7) auf einer Temperatur unterhalb der Erweichungstemperatur des Kunststoffes gehalten wird, wird der Hohlstrang bis zum Festzustand abgekühlt. An der Umlenkrolle (8) wird das Band von dem strukturierten Strang (9) abgetrennt. Das Band (6) kann von einer Vorratsrolle entnommen und nach dem Abtrennen wieder aufgewickelt werden. Es kann jedoch auch als Endlosband kontinuierlich umlaufen.

## Patentanspruch

Verfahren zur Herstellung einer extrudierten Stegdoppelplatte aus Kunststoff mit zwei parallelen Außenwänden und einer Vielzahl von dazwischen angeordneten, die Außenwände verbindenden Stegen und mit einer in Extrusionsrichtung wechselnden Oberflächenstruktur auf der Oberfläche einer oder beider Außenwände durch Extrusion eines thermoplastischen Kunststoffes durch eine mit mehreren Kernstücken ausgerüstete Extrusionsdüse zu einem Hohlstrang, dessen Querschnitt im wesentlichen demjenigen der herzustellenden Stegdoppelplatte entspricht, und Einführung des extrudierten Hohlstranges in eine Unterdruck-Kalibriervorrichtung, während innerhalb des Hohlstranges atmosphärischer Luftdruck herrscht, wobei wenigstens eine Seite des Hohlstranges mit einem mit einer negativen Oberflächenstruktur versehenen flexiblen Band bedeckt wird und im Verbund mit diesem in die Kalibriervorrichtung einläuft, Abkühlung des Hohlstranges in der Kalibriervorrichtung unter die Erweichungstemperatur des Kunststoffes, Trennen des Bandes von dem Hohlstrang nach dem Austritt aus der Kalibriervorrichtung, dadurch gekennzeichnet, daß ein strukturiertes, luftundurchlässiges flexibles Band verwendet wird, das die ganze Breite der Oberfläche des Hohlstranges einnimmt und das mit einer Kraft von mindestens 0,1 N/cm² an der Oberfläche des Hohlstranges haftet, und daß der Unterdruck auf der Seite des Hohlstranges, die mit dem Band bedeckt ist, nur auf dieses einwirkt.

## Claim

Process for producing an extruded double web plate from plastics with two parallel outer walls and a plurality of webs disposed between them and connecting the outer walls and with a surface structure on the surface of one or both outer walls which fluctuates in the direction of extrusion, by extrusion of a thermoplastic synthetic resin through an extrusion die fitted with a plurality of core pieces to form a hollow strip the cross section of which corresponds substantially to that of the double web plate which is to be produced; and introducing the extruded hollow strip into a vacuum calibrating apparatus, whilst atmospheric air pressure prevails inside the hollow strip, and at least one side of the hollow strip is covered with a flexible ribbon which has negative surface structure and enters into the calibrating apparatus in conjunction therewith; cooling the hollow strip in the calibrating apparatus to below the softening temperature of the plastics, and removing the ribbon from the hollow strip after it leaves the calibrating apparatus, characterised in that a structured, flexible strip impervious to air is used, which takes up the entire width of the surface of the hollow strip and adheres to the surface of the hollow strip with a force of at least 0,1 N/cm², and in that the underpressure on the side of the hollow strip which is covered with the ribbon acts only on this ribbon.

## Revendication

Procédé de préparation d'une plaque double nervurée extrudée en résine synthétique à deux parois extérieures parallèles et un grand nombre de nervures disposées entre elles et reliant les parois extérieures et avec une structure de surface variable dans la direction d'extrusion sur la surface d'une paroi extérieure ou sur les deux, par extrusion d'une résine synthétique thermoplastique au travers d'une filière d'extrusion équipée de plusieurs pièces de noyau, sous forme d'un boudin creux dont la section correspond essentiellement à celle de la plaque double nervurée qu'on veut préparer, et envoi du boudin creux d'extrusion dans un dispositif de calibrage sous vide alors qu'à l'intérieur du boudin creux il y a de l'air à pression atmosphérique, une face au moins du boudin creux étant recouverte d'une bande flexible portant une structure de surface négative et se déplaçant en association avec la bande dans le dispositif de calibrage, refroidissement du boudin creux dans le dispositif de calibrage jusqu'à une température inférieure à la température de ramollissement de la résine synthétique, séparation de la bande et du boudin creux après sortie du dispositif de calibrage, caractérisé en ce que, on utilise une bande flexible, imperméable à l'air, structurée, qui occupe toute la largeur de la surface du boudin creux et adhère à la surface de ce boudin avec une force d'au moins 0,1 N/cm², et en ce que le vide appliqué sur la face du boudin creux recouverte de la bande n'agit que sur cette dernière.

Fig. 1

0 015 312